Europäisches Patentamt

European Patent Office

Office européen des brevets

(19)

(11) Veröffentlichungsnummer: **0 111 172**
**B1**

(12) **EUROPÄISCHE PATENTSCHRIFT**

(45) Veröffentlichungstag der Patentschrift:
02.09.87

(51) Int. Cl.⁴: **G 01 T 1/24,** H 05 G 1/44

(21) Anmeldenummer: **83111253.7**

(22) Anmeldetag: **11.11.83**

(54) Röntgenstrahlenmesskammer mit Siliziumhalbleiterdetektoren.

(30) Priorität: **13.11.82 DE 3242067**

(43) Veröffentlichungstag der Anmeldung:
**20.06.84 Patentblatt 84/25**

(45) Bekanntmachung des Hinweises auf die Patenterteilung:
**02.09.87 Patentblatt 87/36**

(84) Benannte Vertragsstaaten:
**BE CH DE FR GB IT LI NL SE**

(56) Entgegenhaltungen:
**EP-A-0 035 182**

**NUCLEAR INSTRUMENTS AND METHODS, Band 176, Nr. 3, 15. Oktober 1980, Seiten 601-603, Amsterdam, NL, A.N. SMIRNOV et al.: "On the response of a breakdown counter to pulsed gamma- and electron-radiation"**
**NUCLEAR INSTRUMENTS AND METHODS, Band 134, Nr. 1, 1. April 1976, Seiten 119-124, Amsterdam, NL, H. YAMAMOTO et al.: "Large area mosaic solid-state detectors for low yield fission study"**
**IEEE TRANSACTIONS ON NUCLEAR SCIENCE, Band NS-25, Nr. 2, April 1978, Seiten 910-915, New York, US, R.C. TRAMMELL: "Semiconductor detector fabrication techniques"**

(73) Patentinhaber: **KOCH & STERZEL GmbH & Co., Bamlerstrasse 61, D-4300 Essen 1 (DE)**

(72) Erfinder: **Aldenhövel, Hans, Spillheide 74, D-4300 Essen 1 (DE)**
Erfinder: **Menge, Günter, Defreggerstrasse 30, D-4300 Essen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine medizinische Röntgenstrahlenmeßkammer mit Siliziumhalbleiterdetektoren, die in konisch-kreisförmigen Mulden einer Substratschicht eingebettet sind und auf der Strahlenein- und austrittsseite jeweils mit einem dünnen Leiter verbunden sind und zum Schutz und/oder der Stabilitätsverbesserung zusätzliche Decklagen aufweisen.

Derartige Einrichtungen werden zur Messung der Dosisleistung bei medizinischen Röntgenaufnahmen und zur Steuerung eines Belichtungsautomaten angewandt. Es gibt prinzipiell zwei Möglichkeiten, die Röntgenstrahlenmeßkammer im Strahlengang der Röntgenröhre anzuordnen; entweder vor oder hinter dem zu belichtenden Film. Bei einer Lage der Meßkammer hinter dem Film kann aber nur noch ein Bruchteil der von der Röntgenröhre abgegebenen Dosisleistung von der Meßkammer ermittelt werden, da zuvor bereits im Patienten und nicht unerheblich in der Röntgenfilmkassette Absorption auftritt. Die Anordnung einer Meßkammer hinter dem Film hat den Vorteil, daß sie sich nicht auf dem Film abbilden kann.

Die andere Möglichkeit, die Meßkammer vor dem Röntgenfilm anzuordnen, also zwischen dem Patienten und der Röntgenfilmkassette, hat den Vorteil, daß eine wesentlich höhere Dosisleistung von der Meßkammer erfaßt wird, die dann quasi der Dosisleistung entspricht, mit der auch der Film belichtet wird.

Der Nachteil dieser, vor dem Film liegenden Meßkammer ist aber, daß sie sich mehr oder minder stark auf dem Röntgenbild abbildet; zudem nimmt durch die Erhöhung des Abstandes Patient - Filmebene die geometrische Unschärfe zu.

Zur weitgehenden Vermeidung der angeführten Nachteile ist es bekannt, sogenannte Halbleitermeßkammern vor dem Röntgenbild anzuordnen. Diese Kammern sind zum einen sehr dünn - wenige Millimeter - und geben einen ausreichend hohen Meßstrom ab, sodaß auch bei geringen Dosisleistungen noch ein Signal an den Belichtungsautomaten abgegeben werden kann.

Eine derartige Röntgenstrahlenmeßkammer mit Siliziumhalbleiterdetektoren ist aus EP-A-00 35 182 bekannt.

Bei dieser Ausführung sind mehrere Siliziumhalbleiterdetektoren entsprechend der in der Röntgentechnik gebräuchlichen Dominantenfelder für die unterschiedlichen Untersuchungsverfahren in der Meßkammer angeordnet. Die Siliziumhalbleiterdetektoren sind hierbei in innen und außen konusförmige Fassungen eingeklebt, die wiederum mit einem Substrat, das als Trägermedium dient, verbunden sind. Die Detektoren sind auf der Stahleneintrittsseite mit einem, in die konusförmige Fassung hineinragenden Leiter von hinten seitlich kontaktiert, sodaß diesen Leitern zusätzlich noch Halteaufgaben der Fassung zukommen.

Nachteilig bei dieser Röntgenstrahlenmeßkammer ist es, daß zum einen der Siliziumhalbleiterdetektor scharfkantig ausgeführt ist und so in der Fassung eingebettet ist, daß er sich bei Normal- und insbesondere bei Schrägaufnahmen deutlich auf dem Röntgenbild - genauso wie die Leiterelemente - abzeichnet, und zum anderen der konstruktive Aufwand durch die zusätzliche Fassung sehr hoch ist.

Obwohl sich auch die bekannte Anmeldung mit der gleichen Aufgabenstellung befaßt, ist es nicht gelungen, die Nachteile auszugleichen, wie es in der Anmeldeschrift selbst zum Ausdruck gebracht wird, daß bei dieser Art der Einbettung Schatten durch den Sensor auf dem Röntgenfilm entstehen können. Bei Röntgenaufnahmen im medizinischen Bereich ist es aber notwendig, um eine eindeutige Diagnose zu stellen, daß sich keine unnötigen Dinge auf dem Röntgenfilm abbilden und möglicherweise dadurch eine medizinische Diagnose erschweren oder gar zu einer Fehldiagnose führen.

Da die vorliegende Erfindung aber in der Diagnostik als medizinische Röntgenstrahlenmeßkammer ihre Anwendung findet, sind die Nachteile der in der EP-A-0035182 aufgezeigten Einbettung für den Radiologen als Anwender nicht tragbar. Eine Grundvoraussetzung der medizinischen Diagnostik ist, daß sich die Siliziumdetektoren auf dem Röntgenfilm nicht abbilden, sowohl bei der Normalaufnahme, direkten Bestrahlung, oder auch unter einem beliebigen Winkel.

Aufgabe der Erfindung ist es daher, eine medizinische Röntgenstrahlenmeßkammer mit Siliziumhalbleiterdetektoren gemäß dem Oberbegriff anzugeben, die die angeführten Nachteile vermeidet, und bei der die Siliziumhalbleiterdetektoren selbst bzw. ihre Position sowohl bei normal, als auch unter einen beliebigen Winkel gemachten Röntgenaufnahmen nicht auf dem Röntgenbild zu erkennen sind.

Diese Aufgabe wird durch die angegebenen Mittel nach Anspruch 1 gelöst.

Eine vorteilhafte Ausgestaltung der Erfindung ergibt sich durch die Maßnahme, daß die Trägerplatte 5 für alle Siliziumhalbleiterdetektoren 2 gemeinsamer Leiter auf der Strahlenaustrittsseite ist, und die einzelnen Leiter 6 auf der Strahleneintrittsseite in Form einer dünnen, weniger als einem Aluminiumgleichwert von 10 μm entsprechenden leitenden Folie auf die Siliziumhalbleiterdetektoren 2 geklebt werden.

In Fortführung der Erfindung ist es vorteilhaft, wenn die Trägerplatte 5 aus einem Kunststoff mit einer leitenden Oberfläche besteht, und daß dessen Aluminiumgleichwert kleiner als 100 μm ist.

Die Erfindung wird nachfolgend anhand eines mehr oder minder schematisch dargestellten Ausführungsbeispieles einer medizinischen

Röntgenstrahlenmeßkammer näher erläutert.

Dabei zeigen:

Figur 1: den Aufbau einer medizinischen Röntgenstrahlenmeßkammer,

Figur 2: einen Ausschnitt der medizinischen Röntgenstrahlenmeßkammer mit einem Siliziumhalbleiterdetektor in perspektivischer Ansicht,

Figur 3: einen Übergang vom Siliziumhalbleiterdetektor zum Substrat.

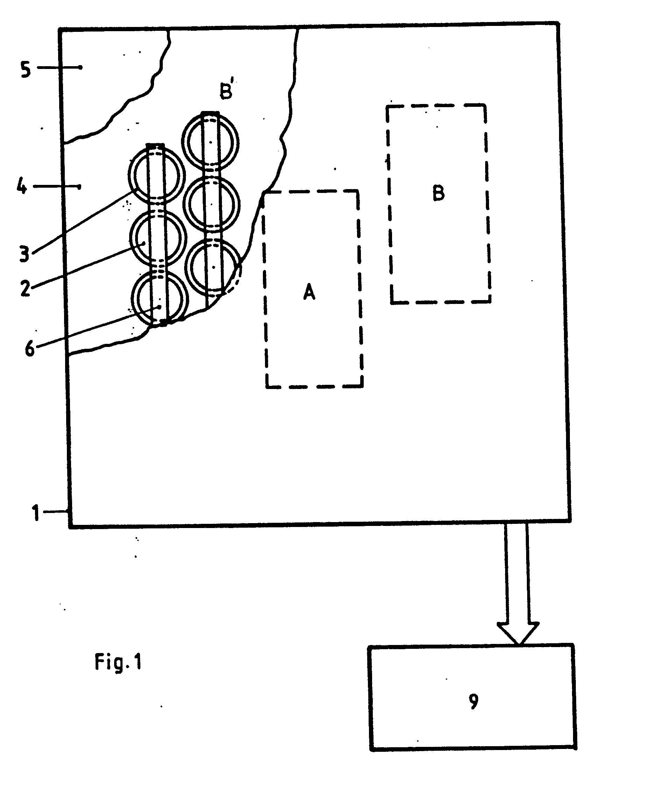

Die in Figur 1 dargestellte medizinische Röntgenstrahlenmeßkammer 1, im nachfolgenden nur noch kurz mit "Meßkammer" bezeichnet, ist über ein nicht näher dargestelltes Verbindungskabel an einen Belichtungsautomaten 9 angeschlossen. Sie weist in dieser, für die Röntgentechnik gebräuchlichen Ausführungsform mehrere Dominanten A, B und B' auf, die wahlweise jeweils nach dem zu untersuchenden Bereich an den Belichtungsautomaten einen Strom, entsprechend der einfallenden Dosisleistung, liefern.

Die Dominanten A und B sind gestrichelt eingezeichnet, und die Dominante B' ist so dargestellt, daß man ihren inneren Aufbau mit den Siliziumhalbleiterdetektoren erkennen kann.

Als günstige Anordnung der Siliziumhalbleiterdetektoren 2, im weiteren nur noch kurz mit "Detektoren" bezeichnet, hat es sich herausgestellt, sechs Detektoren pro Dominante zu verwenden, und diese in zwei Reihen zu je drei Detektoren nebeneinander flächendicht zu plazieren. Die Siliziumhalbleiterdetektoren bestehen dabei aus dünnen, zwischen 100 µm - 400 µm dicken, etwa 25 bis 40 mm durchmessenden runden Siliziumscheiben. Ebenso können aber auch eine Vielzahl wesentlich kleinerer Siliziumscheiben flächendicht eine Dominante A, B, B' bilden, oder eine große Siliziumscheibe mit den Maßen der Dominante Verwendung finden, was aber zur Zeit technisch bzw. und/oder wirtschaftlich nicht realisierbar ist. Zur Herstellung einer elektrischen Verbindung sind die Detektoren zum einen mit einem dünnen Leiter 6 und der als Leiter wirkenden Trägerplatte 5 kontaktiert, was aber weiter unten näher erläutert wird.

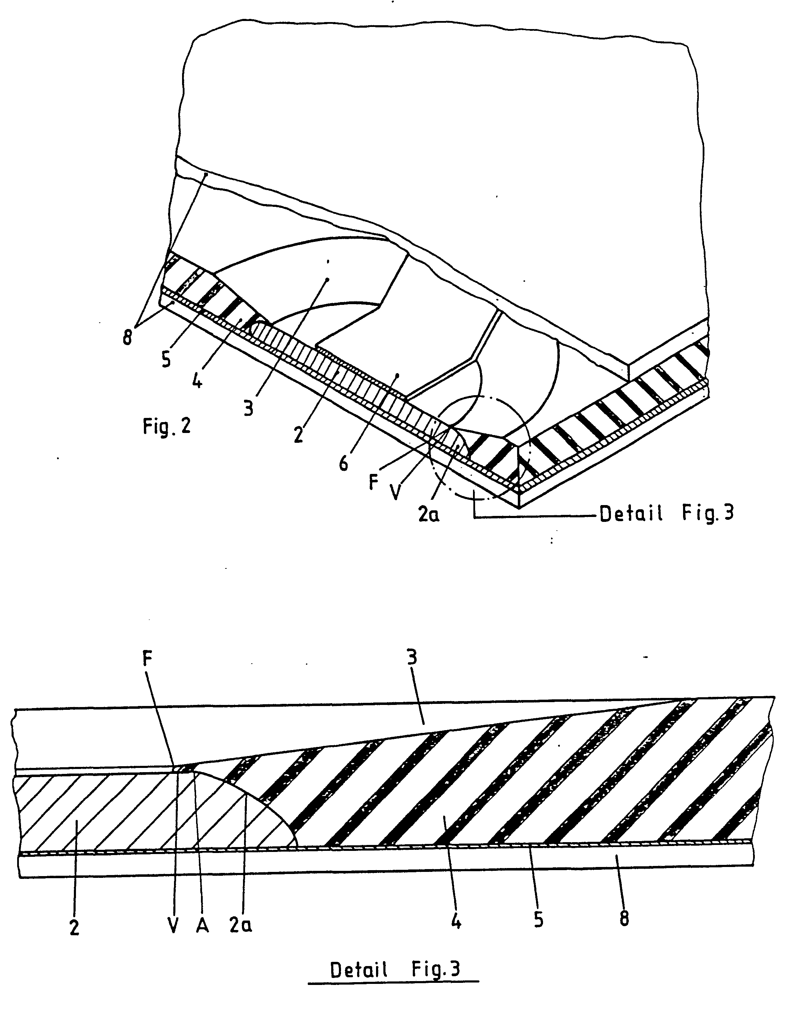

Die Figur 2 zeigt in einer perspektivischen Ansicht einen Schnitt durch die Röntgenstrahlenmeßkammer mit einem Siliziumhalbleiterdetektor.

Der Detektor 2 besteht dabei aus einer dünnen runden Siliziumscheibe, die an ihrem Rand nach außen hin eine etwa viertelkreisförmige Verjüngung 2a aufweist. Die Substratschicht 4 ist mit einer konisch-kreisförmigen Mulde 3 versehen, in die der Detektor 2 eingeschweißt ist. Eine Möglichkeit des Einschweißvorganges ist gegeben, wenn zunächst entsprechend den verwendeten Detektoren 2, Löcher in die Substratschicht 4 eingebracht werden, und diese dann mit der Trägerplatte 5, die auch gleichzeitig gemeinsamer Masse- bzw. Minusleiter für alle Detektoren ist, verbunden (verklebt, verschweißt) werden. In die somit entstandenen Sacklöcher werden die Detektoren 2 eingebracht und von oben mit einem Werkzeug, welches gleichzeitig die konisch-kreisförmige Mulde 3 derart herstellt, daß der Fußpunkt des Böschungswinkels F in etwa mit dem Anfangspunkt V der Verjüngung 2a zusammenfällt, luftporenfrei verschweißt, bzw. eingeschmolzen. Das Substrat 4 besteht daher aus einem gut schmelzbarem Material mit geringer Wärmeleitfähigkeit. Außerdem weist das Substrat einen geringen Absorptionskoeffizienten auf, der in der Nähe des Absorptionskoeffizienten des Detektors 2 liegt, sodaß sich bei den unterschiedlichen Dicken des Detektors 2 und der Substratschicht 4 derselbe Aluminiumgleichwert für beide herstellen läßt.

Die Trägerplatte 5 kann z. B. aus Aluminium bestehen oder aus allen Materialien, die an der Detektorseite leitend ausgeführt sind. Als vorteilhaft hat es sich dabei herausgestellt, wenn die Trägerplatte 5 einen geringeren Aluminiumumgleichwert als 100 µm aufweist, da dann die Meßkammer sehr dünn ausgeführt werden kann und nicht zuviel Strahlung in ihr absorbiert wird. Durch die Leiteigenschaft der Trägerplatte 5 wird der Detektor 2 zur Herstellung der Plusleitung nur noch von oben mit Hilfe des oben erwähnten dünnen Leiters 6 kontaktiert. Da in einer Röntgenaufnahme scharfkantige Dickenunterschiede von weniger als 10 µm Aluminiumgleichwert zu erkennen sind, besteht der Leiter 6 aus einer Aluminiumfolie mit weniger als 10 µm Dicke.

Zum Schutz vor Schäden an den Siliziumhalbleiterdetektoren und zur zusätzlichen mechanischen Stabilität und Isolierung der Meßkammer 1 werden von oben die Decklage 8 auf die Substratschicht 4 bzw. auf die Unterseite der Trägerplatte 5 die Decklage 8 aufgebracht.

Die Meßkammer 1 bildet dann eine dünne, nur wenige Millimeter dicke, aber mechanisch stabile Einheit, die an einen Belichtungsautomaten 9 angeschlossen werden kann und zum täglichen Einsatz in der Röntgendiagnostik geeignet ist.

Die Wirkungsweise des erfindungsmäßigen Gegenstandes wird nachfolgend näher erläutert.

Wird die in Figur 1 gezeigte Meßkammer 1 vor einer Röntgenfilmkassette in den Strahlengang der Röntgenröhre gebracht und eine Leeraufnahme gemacht, so ergibt sich eine Abbildung auf dem Röntgenfilm derart, daß dort, wo sich ein Siliziumhalbleiterdetektor befindet, um diesen eine ringförmige Zone mit einer etwas erhöhten Schwärzung S abzeichnet.

Bei einer Normalaufnahme, d.h. einer Röntgenaufnahme mit einer Strahlenrichtung senkrecht zur Filmebene ergibt sich dabei ein Schwärzungsverlauf, der aufgrund der Zonen mit unterschiedlichen Absorptionen entsteht. Diese unterschiedliche Schwärzung ist nur auf einer Leeraufnahme zu sehen, d.h. im diagnostischen Bereich nicht sichtbar.

Der Idealfall wäre daher derjenige der Abnahme der Substratschichtdicke bei gleichzeitiger linearer Zunahme der Verjüngung 2a bis auf die Dicke des Detektors 2, was einem stets gleichen Absorptionskoeffizienten entsprechen würde, und somit einer konstanten Schwärzung S. Dies erfordert aber sehr flach ausgearbeitete Randzonen der Detektoren, die aber bei einer Detektorendicke von 100 um - 400 um nicht realisierbar sind, da aufgrund des porösen Siliziums die Randzonen ab- bzw. ausbrechen würden. Es hat sich aber gezeigt, daß es ausreicht, wenn sich die Siliziumscheiben am Rand viertelkreisförmig verjüngen und der Böschungswinkel der Mulde 3 ausreichend flach genug gewählt wird.

Für den Radiologen sind aber die ringförmigen, etwas dunkleren Zonen, die die Lage der Detektoren 2 in einer Leeraufnahme anzeigen, bei einer Röntgenaufnahme von Objekten nicht sichtbar, was mit einer wie vor beschriebenen medizinischen Meßkammer erreicht wird.

Es ist leicht ersichtlich, daß dies auch für Röntgenaufnahmen unter einem Winkel schräg zur Aufnahmeebene gilt.

Der besondere Vorteil der Erfindung ist darin zu sehen, daß die Röntgenstrahlenmeßkammer zum einen sehr flach ausgeführt werden kann - bei einer Siliziumhalbleiterdicke von 100 $\mu$m - 400 $\mu$m nur wenige Millimeter - was die Distanz Patient-Filmebene verringert, und zum anderen die Detektoren bei allen, in der Röntgendiagnostik erforderlichen Aufnahmen auf dem Röntgenfilm nicht abgebildet werden.

## Patentansprüche

1. Medizinische Röntgenstrahlenmeßkammer (1) mit Siliziumhalbleiter-Detektoren (2), die in konisch-kreisförmigen Mulden (3) einer Substratschicht (4) eingebettet sind und auf der Strahlenein- und austrittsseite jeweils mit einem dünnen Leiter (5/6) verbunden sind und zum Schutz und/ oder der Stabilitätsverbesserung zusätzliche Decklagen (8) aufweisen, dadurch gekennzeichnet, daß jeder Siliziumhalbleiterdetektor (2) am Rand eine nach außen weisende Verjüngung (2a) aufweist, und daß er in der Substratschicht derart eingeschweißt ist, daß der Fußpunkt (F) des Böschungswinkels der konisch-kreisförmigen Mulde mit dem Anfangspunkt (A) der Verjüngung (2a) in etwa zusammenfällt, und daß die Schichtdicke des Substrates (4) und die Dicke des Siliziumhalbleiterdetektors (2) so gewählt sind, daß diese einem gleichgroßen Aluminiumwert entsprechen.

2. Medizinische Röntgenstrahlenmeßkammer mit Siliziumhalbleiterdetektoren nach Anspruch 1, dadurch gekennzeichnet, daß die Trägerplatte (5) für alle Siliziumhalbleiterdetektoren (2) gemeinsamer Leiter (6) auf der Strahlenaustrittseite ist, und die einzelnen Leiter (6) auf der Strahleneintrittseite in Form einer dünnen, weniger als einem Aluminiumgleichwert von 10 um entsprechenden, leitenden Folie auf die Siliziumhalbleiterdetektoren (2) geklebt werden.

3. Medizinische Röntgenstrahlenmeßkammer mit Siliziumhalbleiterdetektoren nach Anspruch 2, dadurch gekennzeichnet, daß die Trägerplatte (5) aus einem Kunststoff mit einer leitenden Oberfläche besteht, und daß der Aluminiumgleichwert kleiner als 100 $\mu$m ist.

## Claims

1. Medical X-ray measuring chamber (1) with silicon semiconductor detectors (2) which are embedded in cone-shaped circular depressions (3) of a substrate layer (4) and are respectively connected at their x-ray entry and exit sides with a thin conductor (5/6) and which are provided with additional upper layers (8) for security reasons and/or for reasons of stability amelioration, characterized in that each silicon semiconductor detector (2) shows at its edge a diminution (2a) to the exterior and is welded into the substrate layer in such a way that the feetpoint (F) of the slope angle of the cone-shaped circular depression almost coincides with the starting point (A) of the diminution (2a) and that the layer thickness of the substrate (4) and the thickness of the silicon semiconductor detector (2) are chosen such that they correspond to an equally high aluminium value.

2. Medical X-ray measuring chamber with silicon semiconductor detectors as claimed in claim 1, characterized in that the support plate (5) is the commun conductor (6) at the X-ray exit side for all silicon semiconductor detectors (2), and that the individual conductors (6) at the x-ray entry side are glued on the silicon semiconductor detectors (2) in the form of a thin conducting film corresponding to a value being inferior to an aluminium mean value of a periodic quantity of 10 $\mu$m.

3. Medical X-ray measuring chamber with silicon semiconductor detectors as claimed in claim 2, characterized in that the support plate (5) is made of a synthetic material with a conducting surface and that the aluminium mean value of a periodic quantity is less than 100 $\mu$m.

## Revendications

1. Chambre de mesure à rayons-X (1) avec détecteurs de semiconducteur au silicium (2), qui sont enrobés dans un creux conique-circulaire (3) d'une couche de substrat (4) et qui sont liés avec un mince conducteur (5/6) au côté d'entrée et de sortie des rayons et qui montrent des couches extérieures (8) additionels pour les raison de securité et/ou pour l'amélioration de stabilité,

characterisé en ce que chaque détecteur de semiconducteur au silicium (2) montre à son bord une diminution (2a) vers l'extérieur et qui est soldé dans le couche de substrat, que le point de pied (F) de l'angle naturel du repos du creux conique-circulaire coincide environs avec le point de debut (A) de la diminution (2a) et que l'épaisseur du couche de substrat (4) et l'épaisseur du détecteur de semiconducteur au silicium (2) est choisi de sorte que celui correspond à une valeur d'aluminium de même valeur.

2. Chambre de mesure à rayons-X (1) avec détecteurs de semiconducteur au silicium (2) selon revendication 1,

characterisé en ce que le plat de support (5) est le conducteur commun (6) au côté de sortie des rayons pour tous les détecteurs de semiconducteur au silicium (2) et que les singles conducteurs (6) sont collés sur le côté d'entrée de rayon sous forme d'un film mince conducteur avec une valeur moyenne linéaire en temps à 10 µm sur les semiconducteur au silicium (2).

3. Chambre de mesure à rayons-X avec détecteurs de semiconducteur au silicium selon revendication 2,

characterisé en ce que le plat de support (5) est fabriqué d'un matière plastique avec un surface conducteur et ce que la valeur moyenne linéaire en temps est inférieure 100 µm.

Fig. 1

Fig. 2

Detail Fig. 3

Detail Fig. 3